# EUROPEAN PATENT APPLICATION

(11) **EP 4 842 018 A1**
(43) Date of publication of application: **18.11.2026**
(21) Application number: 25175970.0
(22) Date of filing: 13.05.2025
(51) Int. Cl.: H04W 4/38, H04L 41/08, H04L 41/14, H04W 16/18, H04W 16/22

(54) **DEVICE AND METHOD FOR PROVIDING A SENSING SERVICE BY A MOBILE RADIO COMMUNICATION SYSTEM**

(71) Applicant: NTT DOCOMO, INC., Tokyo 100-6150 (JP)
(72) Inventor: ÜSTOK, Refik Fatih, 80687 Munich (DE); AZEM, Dania, 80687 Munich (DE); KATSALIS, Konstantinos, 80687 Munich (DE); TAMURA, Ryoji, Tokyo, 100-6150 (JP)
(74) Representative: Viering, Jentschura & Partner mbB Patent- und Rechtsanwälte

(57) **Abstract**

According to one embodiment, a method for providing a sensing service by a mobile radio communication system is described comprising receiving a specification of a sensing task, wherein the specification includes requirements, including goals and/or constraints, of the sensing task, determining a candidate configuration of the mobile radio communication system to perform the sensing task, requesting to instantiate a simulation environment that is a digital replica of the mobile radio communication system based on the specification of the sensing task and the candidate configuration, performing a simulation of sensing according to the candidate configuration by the mobile radio communication system, determining, from results of the simulation, whether the sensing according to the candidate configuration fulfils the goals and/or constraints and performing sensing according to the candidate configuration if it has been determined that sensing according to the candidate configuration fulfils the goals and/or constraints.

## Description

The present disclosure relates to devices and methods for providing a sensing service by a mobile radio communication system.

According to 3GPP ISAC (Integrated Sensing and Communication), mobile terminals of a 5G (Fifth Generation) communication system can perform 5G wireless sensing, i.e. get information about characteristics of an environment and/or objects within the environment using NR (new radio) radio frequency signals. This allows a mobile communication network to collect a wide range of data, e.g. velocity, position and materials of objects and devices in an environment and provide corresponding sensing services.

Approaches are desirable which allow reliable provision of such a service according to expectations, requirements and constraints of a consumer of the service.

According to one embodiment, a method for providing a sensing service by a mobile radio communication system is provided comprising receiving a specification of a sensing task, wherein the specification includes requirements, including goals and/or constraints, of the sensing task, determining a candidate configuration of the mobile radio communication system to perform the sensing task, requesting to instantiate a simulation environment that is a digital replica of the mobile radio communication system based on the specification of the sensing task and the determined candidate configuration, performing a simulation of sensing according to the candidate configuration by the mobile radio communication system using the digital replica, determining, from results of the simulation, whether the sensing according to the candidate configuration fulfils the goals and/or constraints and performing sensing according to the candidate configuration if it has been determined that sensing according to the candidate configuration fulfils the goals and/or constraints.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system according to an embodiment.
- Figure 2: illustrates a data processing arrangement according to an intent-based approach for providing a sensing service.
- Figure 3: illustrates the operation of an ISAC executer according to an embodiment.
- Figure 4: illustrates the operation of an ISAC conflict detector according to an embodiment.
- Figure 5: illustrates the operation of an ISAC feasibility checker according to an embodiment.
- Figure 6: illustrates an implementation option according to a 3GPP system.
- Figure 7: illustrates two implementation options in an O-RAN (Open RAN) architecture.
- Figure 8: illustrates an implementation option in an ETSI (European Telecommunications Standards Institute) NFV (Network Functions Virtualisation) architecture.
- Figure 9: shows a flow diagram illustrating a method for providing a sensing service by a mobile radio communication system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a sensing service by a mobile radio communication system, comprising
   - Receiving a specification of a sensing task, wherein the specification includes requirements, including goals and/or constraints, of the sensing task
   - Determining a candidate configuration of the mobile radio communication system to perform the sensing task
   - Requesting to instantiate a simulation environment that is a digital replica of the mobile radio communication system based on the specification of the sensing task and the determined candidate configuration
   - Performing a simulation of sensing according to the candidate configuration by the mobile radio communication system using the digital replica
   - Determining, from results of the simulation, whether the sensing according to the candidate configuration fulfils the goals and/or constraints and
   - Performing sensing according to the candidate configuration if it has been determined that sensing according to the candidate configuration fulfils the goals and/or constraints.
Example 2 is the method of example 1, wherein the candidate configuration comprises a configuration of one or more mobile terminals of the mobile radio communication system, one or more core network components of the mobile radio communication system and/or one or more radio access network components of the mobile radio communication system.
Example 3 is the method of example 1 or 2, wherein the candidate configuration comprises a selection of one or more mobile terminals of the mobile radio communication system, one or more core network components of the mobile radio communication system and/or one or more radio access network components of the mobile radio communication system to perform the sensing task and performing the sensing according to the candidate configuration comprises performing the sensing using the selected one or more mobile terminals of the mobile radio communication system, selected one or more core network components of the mobile radio communication system and/or selected one or more radio access network components of the mobile radio communication system.
Example 4 is the method of any one of examples 1 to 3, wherein the candidate configuration comprises a beamforming configuration, a transmission power configuration and/or a bandwidth and/or frequency configuration of one or more components of the communication system for performing the sensing task.
Example 5 is the method of any one of examples 1 to 4, comprising, in response to having determined that sensing according to the candidate configuration does not fulfil the goals and/or constraints, changing the candidate configuration to another configuration, requesting to instantiate a simulation environment that is a digital replica of the mobile radio communication system based on the specification of the sensing task and the changed candidate configuration, performing a further simulation of sensing according to the changed candidate configuration by the mobile radio communication system using the digital replica, determining, from results of the further simulation, whether the sensing according to the changed candidate configuration fulfils the goals and/or constraints and performing sensing according to the changed candidate configuration if (e.g. only if) it has been determined that sensing according to the candidate configuration fulfils the goals and/or constraints.
Example 6 is the method of any one of examples 1 to 5, comprising determining whether there is a conflict between the candidate configuration and a present configuration of the mobile radio communication system and performing sensing according to the candidate configuration if (e.g. in response to that) it has been determined that sensing according to the candidate configuration fulfils the goals and/or constraints and it has been determined that there is no a conflict between the candidate configuration and a present configuration of the mobile radio communication system.
Example 7 is the method of example 6, comprising determining whether there is a conflict between the candidate configuration and a present configuration of the mobile radio communication system from results of the simulation.
Example 8 is the method of example 7, comprising, in response to having determined that there is a conflict between the candidate configuration and a present configuration of the mobile radio communication system, changing the candidate configuration to another configuration, performing a further simulation of sensing according to the changed candidate configuration by the mobile radio communication system, determining, from results of the further simulation, whether the sensing according to the changed candidate configuration fulfils the goals and/or constraints, determining whether there is a conflict between the changed candidate configuration and the present configuration of the mobile radio communication system and performing sensing according to the changed candidate configuration if (e.g. in response to that) it has been determined that sensing according to the changed candidate configuration fulfils the goals and/or constraints and it has been determined that there is no a conflict between the changed candidate configuration and the present configuration of the mobile radio communication system.
Example 9 is the method of example 8, comprising determining whether there is a conflict between the changed candidate configuration and the present configuration of the mobile radio communication system from results of the further simulation.
Example 10 is the method of any one of examples 1 to 9, wherein performing sensing according to the candidate configuration comprises configuring a plurality of components of the mobile radio communication system according to the candidate configuration and controlling the plurality of components of the mobile radio communication system to perform sensing.
Example 11 is the method of any one of examples 1 to 10, wherein the sensing comprises transmitting one or more mobile radio communication signals, receiving one or more reflections of the one or more mobile radio communication signals and determining sensing data from the one or more reflections
Example 12 is the method of any one of examples 1 to 11, wherein the sensing is Integrated Sensing and Communication according to Third Generation Partnership Project.
Example 13 is the method of any one of examples 1 to 12, comprising determining the candidate configuration by consulting a knowledge base of suitable configurations and storing the candidate configuration in the knowledge base in response to that it has been determined that sensing according to the candidate configuration fulfils the goals and/or constraints.
Example 14 is a mobile communication system, configured to perform the method of any one of examples 1 to 13.

It should be noted that one or more of the features of any of the examples above may be combined with any one of the other examples. In particular, the Examples described in context of the method are analogously valid for the device and vice versa.

According to further embodiments, a computer program and a computer readable medium comprising instructions, which, when executed by a computer, make the computer perform the method of any one of the above Examples are provided.

In the following, various examples will be described in more detail.

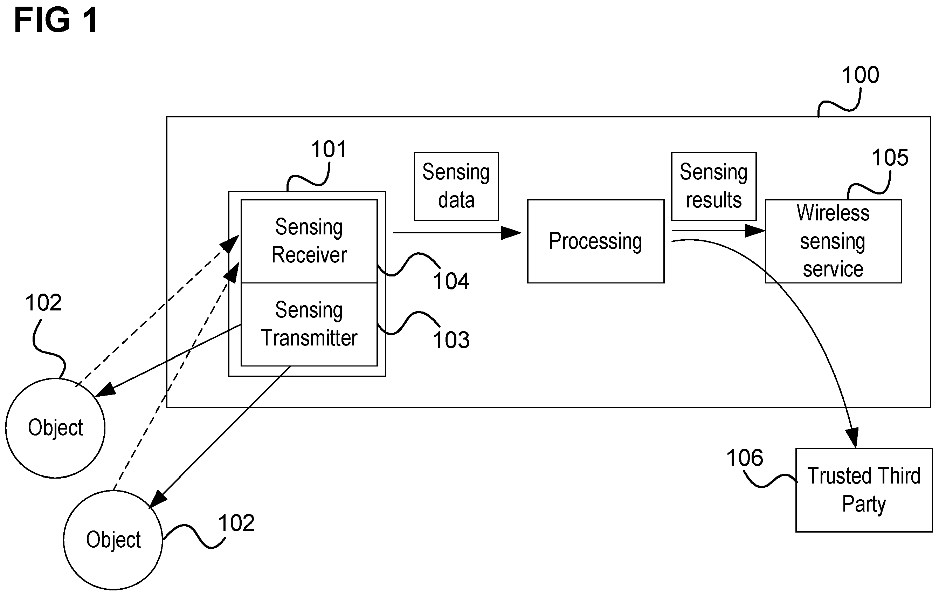

Figure 1 shows a communication system 100, e.g. according to 3GPP (third generation partnership project) comprising a mobile terminal 101 performing sensing (e.g. according to Integrated Sensing and Communication (ISAC) according to 3GPP, see 3GPP TS 22.137), i.e. to provide an (environment) sensing service.

The sensing (e.g. ISAC) refers to (e.g. 5G) wireless sensing, which is a (e.g. 5G) communication system feature providing capabilities to get information about characteristics of the mobile terminal's environment and/or objects 102 within the mobile terminal's environment (e.g., shape, size, orientation, speed, location, distances or relative motion between objects 102, material etc.) using (e.g. NR (new radio) radio frequency signals, which, in some cases, can be extended by information created via previously specified functionalities in the communication system's core network (e.g. EPC (evolved packet core) and/or radio access network (e.g. E-UTRAN (evolved UMTS Terrestrial Radio Access)).

For this, the mobile terminal (also referred herein as UE (user equipment) according to 3GPP), implements a sensing transmitter 103 and a sensing receiver 104 which acquires (e.g. 3GPP) sensing data, i.e. data (or information) derived from (e.g. 3GPP) radio (sensing) signals (sent out by the transmitter 103 and) impacted (e.g., reflected, refracted, diffracted) by an object 102 or environment of interest for sensing purposes. The sensing data is then optionally processed (e.g. to generate sensing results) within the communication system 100 (e.g. handled by the core network or an OAM (Operations, Administration and Maintenance) component) and used with the communication system 100 (by a wireless sending service 105) and/or delivered to a third party 106 (i.e. a consumer of the service).

Sensing scenarios (with respect to where sensing is performed) include
- Indoor sensing, wherein sensing is limited to a specific/pre-defined area. Since sensing is limited to a specific area privacy measures can be more easily applied and user consent can be rather easily handled
- Outdoor sensing, wherein sensing has a wider range and it may be hard to achieve or implement privacy measures and user consent.

A sensing service may be used by various services consumers, such as management functions of the communication system, e.g. network functions, various applications, a third party etc. When a service consumer requests a sensing service (e.g. ISAC), the communication system should be configured in a way to fulfil the consumer's expectations, requirements and constraints regarding the sensing service. For this, according to various embodiments, a management interface is provided to consumers to allow them to request the sensing service from the communication system (specifically from the network side which then instructs and configures mobile terminals accordingly). This interface should allow service consumers to express their expectations regarding the sensing service when requesting provision of the sensing service. Further, according to various embodiments, it is checked whether it is feasible (i.e. suitable) to fulfil these expectations (i.e. to perform the sensing such that the expectations are fulfilled) of a service consumer and to give feedback to the service consumer regarding the result of the request. According to various embodiments, execution of the sensing service is simulated to check whether it is feasible to fulfil the expectations with certain configurations, e.g. network settings (which may be constrained by a current configuration, e.g. network setting).

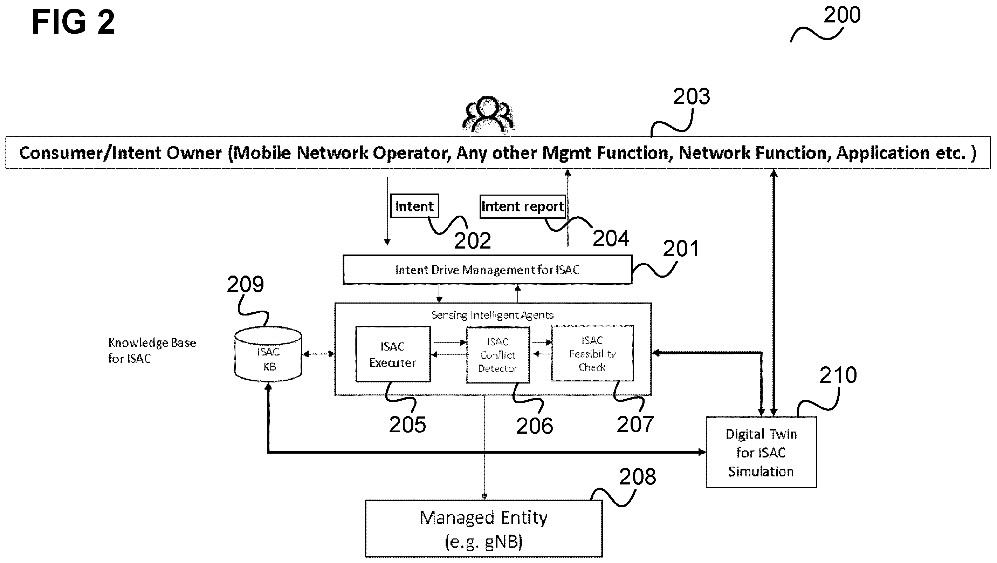

According to various embodiments, an intent-based approach is used for providing a sensing service, i.e. a service consumer acts as an MnS (management service) consumer which requests the sensing service by sending an intent to an intent handler. This is described in the following with reference to figure 2.

Figure 2 illustrates a data processing arrangement 200 according to an intent-based approach for providing a sensing service.

The ML-based data processing arrangement 200 comprises an intent handler 201 for intent driven management of a sensing service (ISAC in this embodiment). The intent handler 201 is configured to receive an intent description 202 from a consumer of the sensing service, acting as intent owner 203 in this intent-based approach, wherein the intent can be seen as a request (and specification) for provision of the sensing service, i.e. for a sensing task. The intent handler 201 handles the intent described by the intent description 202 and sends a corresponding intent report 204 back to the intent owner 203. Reports can be sent periodically, upon request or after the sensing task has been completed. It should be noted that there may be an intent handler 201 per domain such as RAN, core network, service orchestrator etc. The intent report is then sent to each intent handler that needs to be involved and each intent handler processes the intent with regard to the domain within the management domain it is capable for.

According to various embodiments, the intent handler 201 uses intelligent agents (e.g. modules, functional blocks or software tools etc.) for handing the sensing intent described by the intent description 202. The intelligent agents include an ISAC executer 205, an ISAC conflict detector 206 and an ISAC feasibility checker 207. Based on their operation, entities 208 involved in the sensing are controlled, e.g. a base station (e.g. a gNB). The intelligent agents may consult a knowledge data base 209 and, in particular for feasibility checking, use a digital twin (i.e. a digital replica) 210 of the entities 208 (e.g. of at least a part of the communication system, including in particular a RAN part, therefore also referred to as network digital twin (NDT)) for simulation of the sensing. The digital twin 210 is provided, e.g. upon request, by a digital twin provision component, according to requirements specified in the request.

The ML-based data processing arrangement 200 may operate according to the intent model according to 3GPP (in particular 3GPP TS 28.312). According to 3GPP, an intent is a specification of requirements, including goals and constraints, given to a system, without specifying how to achieve them. An intent handler (or intent handling function), such as the intent handler 201, receives the intents, decides which actions must be taken to optimally fulfil all given intents and implements its decisions. For this, an intent handler typically has a knowledge base that contains the intent ontology. They may also have machine-reasoning capabilities to realize knowledge-driven decision-making processes. The following terms are further defined in the context of intents according to 3GPP:
- Intent Expectation: In the most basic form, a consumer may use an intent to express to the producer the need for: "an object O with characteristics S" where the characteristics S reflect the requirements, goals and contexts for an object.
- Expectation Targets: For a given intent expectation, the desired characteristics of the object(s) are the expectation targets to be achieved (e.g. specified in the intent description 202). The expectation targets may include the metrics that characterize the performance of the object(s) or some abstract index that expresses the behaviour of the object(s). A given intent expectation may include multiple expectation targets on the same object or on different objects with the same properties.
- Expectation Objects: The object (s) for which a given expectation is addressed can be expressed with the object's identifier. This may, however, not always be adequate (e.g. if the consumer does not have or know the identifiers of the object) for some intents.
- Context: describes the applicability constraints and conditions that may apply to the intent and its information elements.
- FulfilmentInfo describes the fulfilment related information for an aspect of the intent (i.e. either an expectation, an expectation target, a condition or the whole intent).
- IntentReport (e.g. corresponding to the intent report 204) describes the information provided by the Intent Handler to the subscribing entity or Intent Owner about status and progress regarding the received intent.

For the present use case of a sensing service (specifically ISAC), the intent model (e.g. the generic intent model according to 3GPP TS 28.312) is provided (e.g. extended) with attributes to enable the service consumer 203 to request expectations for ISAC.

For example, the object context of the RAN (Radio Access Network) Intent Expectation Model (i.e. the attributes for specifying intent expectations regarding object context with respect to the RAN) may be extended as illustrated in table 1.

**Table 1**

| **Attribute Name** | **Support Qualifier** | **is Readable** | **is Writable** | **is Invariant** | **is Notifyable** |
|---|---|---|---|---|---|
| coverageAreaPolygonContext | O | T | T | F | F |
| coverageTACContext | O | T | T | F | F |
| pLMNContext | O | T | T | F | F |
| dlFrequencyContext | O | T | T | F | F |
| ulFrequencyContext | O | T | T | F | F |
| rATContext | O | T | T | F | F |
| uEGroupContext | O | T | T | F | F |
| sensingUEGroupContext | O | T | T | F | F |
| sensingFrequencyContext | O | T | T | F | F |
| sensingAreaPolygonContext | O | T | T | F | F |
| sensingAreaTACContext | O | T | T | F | F |

Here, the last four attributes have been newly introduced (which the service consumer 203 may specify in the intent description 202):
- sensingUEGroupContext describes which UE groups are authorized for sensing.
- sensingFrequencyContext describes whether sensing should be performed in licensed or unlicensed bands
- sensingAreaPolygonContext describes the area where the sensing will be performed.
- sensingAreaTACContext describes tracking area code for a group of cells used where UEs are authorized for sensing
- sensingTypeContext describes the type of sensing service is requested, for example, binary sensing or non-binary sensing.

Alternatively, instead of adding sensingUEGroupContext, the attribute UEGroupContext (see fifth to last line of table 1) may also be updated by adding a sensingUE attribute to enable the service consumer 203 to select UEs regardless of 5QI (5G Quality of Service Identifier) or sNSSAI (Single Network Slice Selection Assistance Information) values as illustrated in table 2 (see last line).

**Table 2**

| **Attribute Name** | **Support Qualifier** | **is Readable** | **is Writable** | **is Invariant** | **is Notifyable** |
|---|---|---|---|---|---|
| fiveQI | CM | T | T | F | F |
| sNSSAI | CM | T | T | F | F |
| sensingUE | CM | T | T | F | F |

Further, the expectation targets of the RAN Intent Expectation Model (i.e. the attributes for specifying intent expectations regarding expectation targets with respect to the RAN) may be extended as illustrated in table 3.

**Table 3**

| **Attribute Name** | **Support Qualifier** | **is Readable** | **is Writable** | **is Invariant** | **is Notifyable** |
|---|---|---|---|---|---|
| weakRSRPRatio Target | O | T | T | F | F |
| lowSINRRatio Target | O | T | T | F | F |
| aveULRANUEThpt Target | O | T | T | F | F |
| aveDLRANUEthpt Target | O | T | T | F | F |
| lowULRANUEThptRatio Target | O | T | T | F | F |
| lowDLRANUEThptRatio Target | O | T | T | F | F |
| highUlPrbLoadRatio Target | O | T | T | F | F |
| highDlPrbLoadRatio Target | O | T | T | F | F |
| aveUlPrbLoad Target | O | T | T | F | F |
| aveDlPrbLoad Target | O | T | T | F | F |
| weakRSRPRatio Target | O | T | T | F | F |
| confidenceLevel Target | O | T | T | F | F |
| sensingResolution Target | O | T | T | F | F |
| missedDetectionProbability Target | O | T | T | F | F |
| falseAlarmProbability Target | O | T | T | F | F |
| sensingLatency Target | O | T | T | F | F |
| refreshingSensingRate Target | O | T | T | F | F |

Here, the last six attributes have been newly introduced (which the service consumer 203 may specify in the intent description 202):
- sensingLatencyTarget: describes target specified by the MnS consumer 203, is time elapsed between the event triggering the determination of the sensing result and the availability of the sensing result at the sensing system interface.
- refreshingSensingRateTarget, it describes target rate at which the sensing result is generated by the RAN. It is the inverse of the time elapsed between two successive sensing results
- confidenceLevel Target: describes target specified by the MnS consumer 203, the percentage of all the possible measured sensing results that can be expected to include the true sensing result considering the accuracy.

- sensingResolutionTarget: describes target specified by the MnS consumer 203, the minimum difference in the measured magnitude of target objects (e.g. range, velocity) to be allowed to detect objects in different magnitude.
- missedDetectionProbabilityTarget: describes target specified by the MnS consumer 203, is the conditional probability of not detecting the presence of target object/environment when the target object/environment is present. This probability is denoted by the ratio of the number of events falsely identified as negative, over the total number of events with a positive state. It applies only to binary sensing results.
- falseAlarmProbabilityTarget: describes target specified by the MnS consumer 203, is the conditional probability of falsely detecting the presence of target object/environment when the target object/environment is not present. This probability is denoted by the ratio of the number of events falsely identified as being positive, over the total number of events with a negative state. It applies only to binary sensing results.

It should be noted that it may also be beneficial that some of the existing targets, for example, SINR (signal to interference and noise ratio), RSRP (reference signal received power) targets, can also be used as sensing targets as they can also indicate quality of received signals used for sensing tasks.

Further, the expectation context of the RAN Intent Expectation Model (i.e. the attributes for specifying intent expectations regarding expectation context with respect to the RAN) may be extended as illustrated in table 4.

**Table 4**

| **Attribute Name** | **Support Qualifier** | **isReadable** | **isWritable** | **isInvariant** | **isNotifyable** |
|---|---|---|---|---|---|
| targetAssurance TimeContext | O | T | T | F | F |
| maxUeNumberContext | O | T | T | F | F |
| MinUeNumberContext | O | T | T | F | F |

Here, the last two attributes have been newly introduced (which the service consumer 203 may specify in the intent description 202):
- maxUeNumberContext is a constraint that describes maximum number of UEs should be authorized to fulfil RAN sensing expectation
- minUeNumberContext is a constraint that describes minimum number of UEs should be authorized to fulfil RAN sensing expectation.

Further, the expectation context of the 5G Core Expectation (i.e. the attributes for specifying intent expectations regarding expectation context with respect to the core network) may be extended as illustrated in table 5.

**Table 5**

| **Attribute Name** | **Support Qualifier** | **is Readable** | **is Writable** | **is Invariant** | **is Notifyable** |
|---|---|---|---|---|---|
| nfTypeContext | O | T | T | F | F |
| nfInstanceLocation Context | O | T | T | F | F |
| pLMNContext | O | T | T | F | F |
| taiContext | O | T | T | F | F |
| servingScopeContext | O | T | T | F | F |
| dnnContext | O | T | T | F | F |
| sensingProcessingContext | O | T | T | F | F |
| sensingTypeContext | O | T | T | F | F |
| sensingLocationContext | O | T | T | F | F |

Here, the last three attributes have been newly introduced (which the service consumer 203 may specify in the intent description 202):
- sensingProcessingContext describes requirement of MnS consumer whether Core Network should process sensing data or not.
- sensingTypeContext describes requirement of MnS consumer regarding what kind of sensing data core network should support processing, for example, binary sensing and non-binary sensing
- sensingLocationContext describes requirement of MnS consumer regarding where/ which node the sensing should be supported by CN.

Further, the expectation targets of the 5G Core Expectation (i.e. the attributes for specifying intent expectations regarding expectation targets with respect to the core network) may be extended as illustrated in table 6.

**Table 6**

| **Attribute Name** | **Support Qualifier** | **is Readable** | **is Writable** | **is Invariant** | **is Notifyable** |
|---|---|---|---|---|---|
| maxNumberof PDUsessionsTarget | O | T | T | F | F |
| maxNumberof RegisteredsubscribersTarget | O | T | T | F | F |
| incomingDataTarget | O | T | T | F | F |
| outgoingDataTarget | O | T | T | F | F |
| refreshingSensingRate Target | O | T | T | F | F |

Here, the last attribute has been newly introduced (which the service consumer 203 may specify in the intent description 202):
- refreshingSensingRateTarget describes target rate at which the sensing result is generated by the 5GC. It is the inverse of the time elapsed between two successive sensing results

It should be noted that there are two options regarding ISAC: the service consumer may communicate with the core network of the communications system to request sensing or it may directly communicate with the RAN to request sensing. Accordingly, sensing data may be fed back via the core network (possibly with processing in the core network) or by the RAN. In both cases, the service consumer processes the sensing data (but in the core network case, the core network may perform some pre-processing).

Similarly to an extension of the intent model (as in the examples of tables 1 to 6), the intent report model for the intent report 204 may be provided with attributes which allow the intent handler 201 to report information about the ISAC expectation fulfilment, ISAC feasibility, conflicts etc. In particular, the intent report model may be provide with attributes IntentReport Model should include the attributes corresponding to those of tables 1 to 6 to report fulfilment of sensing targets of a RAN network and a core network, as well as attributes for reporting information about conflict checking and/or feasibility checking (see in particular the operations of the ISAC conflict detector 206 and the ISAC feasibility checker 207 for configurations proposed by the ISAC executer 205 as described in more detail in the following).

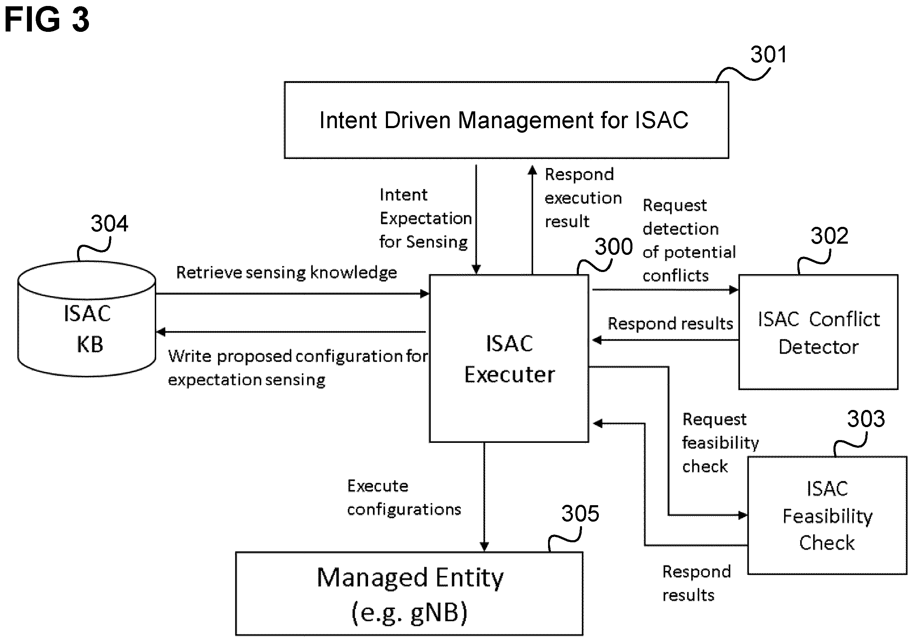

Figure 3 illustrates the operation of an ISAC executer 300 (corresponding to ISAC executer 205).

The ISAC executer 300 communicates with an intent driven management for ISAC 301 (corresponding to intent handler 201), an ISAC conflict detector 302 (corresponding to the ISAC conflict detector 206), an ISAC feasibility checker 303 (corresponding to the ISAC feasibility checker 207) an ISAC knowledge base 304 (corresponding to the ISAC knowledge base 209) and managed entities 305 (corresponding to the entities 208).

The ISAC executer 300 proposes one or more (e.g. optimum) configurations of the managed entities 305 (i.e. determines one or more candidate configurations) utilizing information from the sensing knowledge base 304 (e.g. located in the RAN and/or the core network) in order to enable fulfilment of expectations of an intent, wherein it receives information about the expectations (e.g. attributes) from the intent handler 301.

**In** order to decide possible configurations, in some embodiments, the ISAC executer 300 processes the knowledge in the sensing knowledge base 304, with a Machine Learning/ Artificial Intelligence algorithm, and the resultant inference is used for proposing a configuration. In some embodiments, the ISAC executer may utilize pre-defined policies and rules in order to propose a configuration. After the ISAC executer 300 proposes a possible configuration, the ISAC executer 300 needs to ensure that proposed configuration does not cause any conflict to any existing processes and also needs to ensure that propose configuration can fulfil the consumer expectations.

The ISAC executer 300 requests the ISAC feasibility checker 303 to check whether a proposed configuration is feasible (to fulfil expectations, i.e. goals and constraints indicated in the expectations). Further, it requests the ISAC conflict detector to check whether any potential conflicts with existing intents (that are currently being handled, having their own expectations) or other predetermined configurations (e.g. network settings). Based on results provided by the ISAC feasibility checker 303 and the ISAC conflict detector 302 for a certain proposed configuration for handling a sensing intent, the ISAC executer 300 either proposes another (i.e. determines a changed (candidate) configuration or executes the sensing according to the proposed configuration of the required managed entities 305 by controlling the managed entities 305 accordingly.

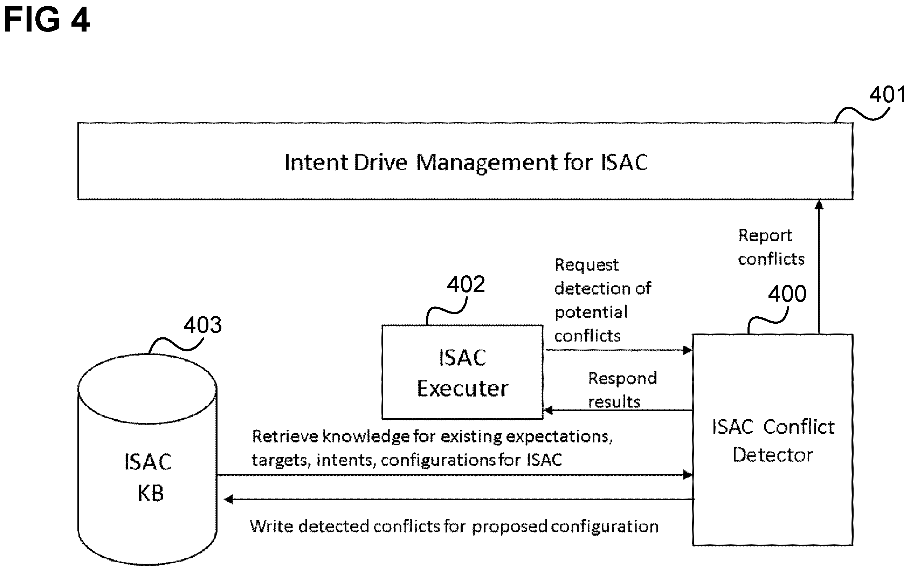

Figure 4 illustrates the operation of an ISAC conflict detector 400 (corresponding to ISAC conflict detector 206).

The ISAC conflict detector 400 communicates with an intent handler 401 (corresponding to intent handler 201), an ISAC executer 402 (corresponding to the ISAC executer 205) and an ISAC knowledge base 403 (corresponding to the ISAC knowledge base 209).

The ISAC conflict detector 400 receives request from the ISAC executer 402 to detect potential conflicts for a configuration (proposed by the ISAC executer 402) to fulfil sensing expectations of an intent. It retrieves knowledge from the ISAC knowledge base 403, for example about existing expectations, targets, intents, configurations for ISAC (i.e. configurations that have been used earlier and have been suitable, e.g. for a similar intent). Using the retrieved information, the ISAC conflict detector 400 detect potential conflicts, e.g. with existing expectations (e.g. of other intents, e.g. maintenance intents, currently handled), targets (e.g. of other tasks), intents, configurations etc. The ISAC conflict detector 400 may write information about detected conflicts for the proposed configuration back to the ISAC knowledge base 403. Further, it responds with conflict results to the ISAC executer 402 (indicating in particular potential conflicts of the proposed configuration). It may further report information about detected conflicts to the intent handler 401.

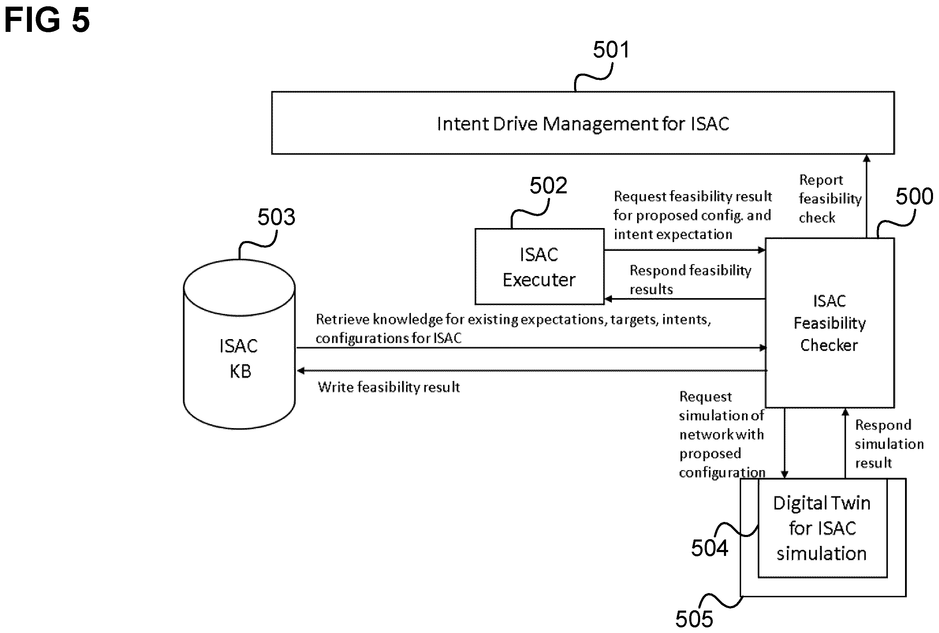

Figure 5 illustrates the operation of an ISAC feasibility checker 500 (corresponding to ISAC feasibility checker 207).

The ISAC feasibility checker 500 communicates with an intent handler 501 (corresponding to intent handler 201), an ISAC executer 502 (corresponding to the ISAC executer 205) an ISAC knowledge base 503 (corresponding to the ISAC knowledge base 209) and a digital twin 504 (corresponding to the digital twin 210).

The ISAC feasibility checker 500 receives a request from the ISAC executer 502 to check whether a configuration (proposed by the ISAC executer 502) is feasible to fulfil expectations of an intent. The ISAC feasibility checker 500 retrieves knowledge from the ISAC knowledge base 503, for example about existing expectations, targets, intents, configurations for ISAC. Using the retrieved information, the ISAC feasibility checker 500 checks whether the proposed configuration is feasible to if feasibility result for proposed config to fulfil the expectations. Further, to check feasibility for the proposed configuration, it may request a digital twin provision component 505 to provide the digital twin 504 and then request the digital twin 504 to simulate sensing using the proposed configuration, e.g. in case the knowledge base does not contain an existing feasibility result for the proposed configuration. The ISAC feasibility checker 500 may then receive simulation results from the digital twin 504 and write a feasibility result to the ISAC knowledge base 503. Further, it responds with a feasibility result to the ISAC Executer 502 (indicating in particular whether the proposed configuration is feasible to fulfil the expectations). It may further report information about the feasibility check (in particular its result) to the intent handler 501.

The ISAC feasibility checker 500 may act as a (e.g. MnS) consumer of a simulation service offered by the digital twin provision component 505 and the digital twin (NDT) 504 and requests the digital twin provision component 505 to create the digital twin 504 (e.g. a digital twin instance) with modelling requirements (e.g. using a specific information object class (IOC)). The ISAC feasibility checker 500 uses the modelling requirements to specify the scope of the network to be modelled and the sensing to be simulated (which may also include emulation). The modelling requirements may include:
- an NDT scope: one or more intent expectation object whose sensing behaviour should be simulated by the NDT 504, for example RAN network components (indicated by or behaving according to the sensing expectations). These typically correspond to the entities 208 which are eventually controlled to perform the sensing.
- modelling data: the configuration for which the NDT 504 should simulate the sensing, e.g. proposed CM (configuration management) data.

According to the modelling requirements, the NDT (acting as MnS producer regarding the simulation service) may send an inquiry request for information related to the objects given in the NDT scope and synchronizes the data from the managed entities.

After it has created the NDT 504 for the simulation, the digital twin provision component 505 then notifies the ISAC feasibility checker 500 that the NDT 504 has been created. The ISAC feasibility checker 500 may then request the NDT 504 to perform the simulation (e.g. as a provisioning operation) giving request parameters such as
- operation type: e.g. a provisioning operation type as defined in 3GPP TS 28.532, e.g. modifyMOIAttributes operation.
- configuration data: As per the proposed configuration to be checked by the ISAC Feasibility Checker 500
- impact detectors: intent expectation targets as specified by the intent owner 203 (which for example specify goals of the objects of the NDT scope).

The NDT 504 then performs the simulation (using the NDT instance) and collects information about its impact regarding the NDT instance. The impact could be fulfilment feasibility reporting from the NDT instance. The NDT 504 then reports a simulation result (e.g. including the impact) to the ISAC feasibility checker 500. Content of this report may, for example, include the impact which is a key-value list where the keys contain the impact detectors specified (e.g. corresponding at least a part of the expectation targets). Alarms may also be reported if any are raised in the simulation.

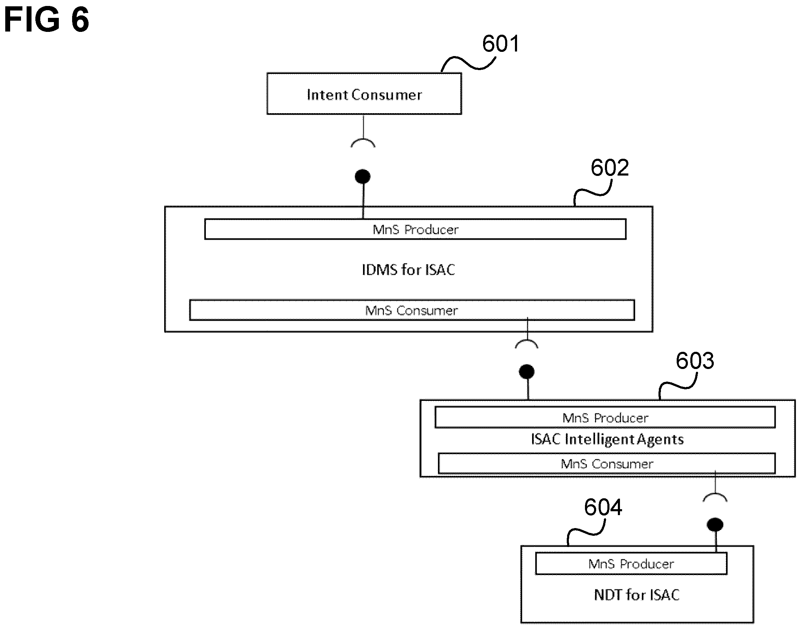

Figure 6 illustrates an implementation option according to a 3GPP system.

In this embodiment, the intent handler 602 acts as management service (MnS) producer with regard to the intent owner 601 and as an MnS consumer with regard to the ISAC intelligent agents 603.

The ISAC intelligent agents 603 act as MnS producer with regard to the intent handler 602 and as MnS consumer with respect to the digital twin (NDT) 604.

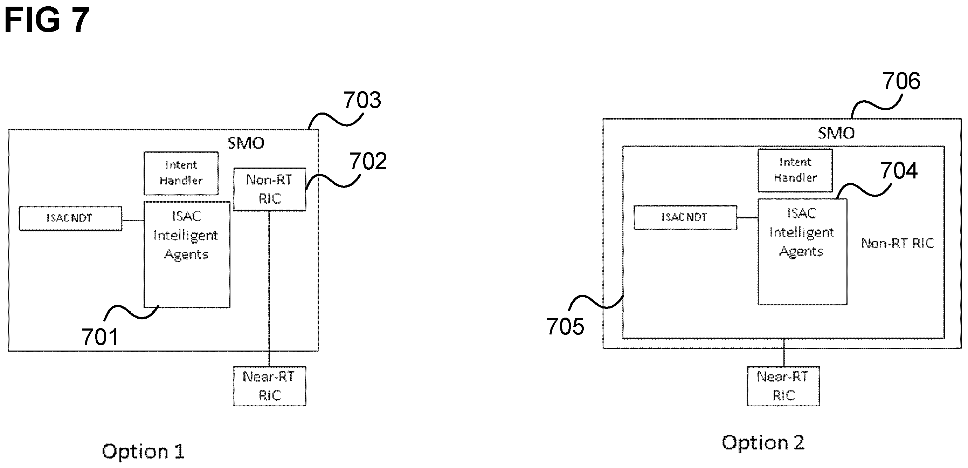

Figure 7 illustrates two implementation options in an O-RAN (Open RAN) architecture.

In a first option, the intelligent agents 701 are separate from a non-real-time RAN intelligent controller (Non-RT RIC) 702 but part of an SMO (Service Management and Orchestration) 703 including the non-real-time RAN intelligent controller 702.

In a second option, the intelligent agents 704 are part of a non-real-time RAN intelligent controller (Non-RT RIC) 705 of a SMO 706, for example realized as rApps.

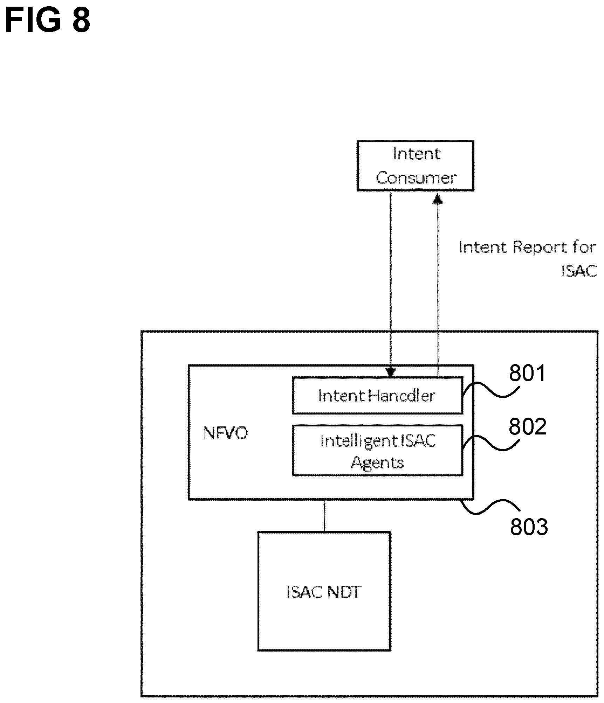

Figure 8 illustrates an implementation option in an ETSI (European Telecommunications Standards Institute) NFV (Network Functions Virtualisation) architecture.

In this option, the Intent handler 801 and the intelligent agents 802 are part of an NFVO (NFV Orchestrator) 803.

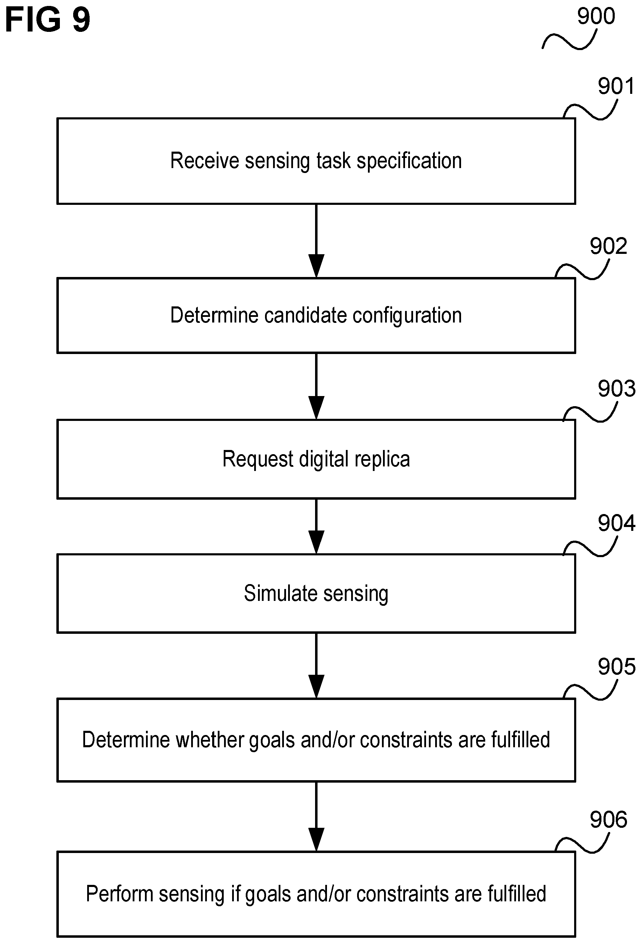

In summary, according to various embodiments, a method is provided as illustrated in figure 9.

Figure 9 shows a flow diagram 900 illustrating a method for providing a sensing service by a mobile radio communication system.

In 901, a specification of a sensing task is received, wherein the specification includes requirements, including goals and/or constraints, of the sensing task (e.g. in the form of expectations, e.g. according to an intent model, e.g. according to 3GPP). See for example tables 1 to 6 and the accompanying description for examples of goals and/or constraints. One or more of those may be included as goals and/or constraints, in particular in context of an intent-based specification of the sensing task as expectations (but not limited thereto and not limited to a 5G or 3GPP network).

In 902, a candidate configuration (i.e. a configuration that is possibly used for the sensing) of the mobile radio communication system to perform the sensing task is determined, e.g. by consulting a knowledge base, e.g. including information about functionalities and capabilities of components of the mobile radio communication system.

In 903, it is requested to instantiate a simulation environment that is a digital replica of the mobile radio communication system based on the specification of the sensing task and the determined candidate configuration. In other words, the creation of a digital twin instance is triggered by a corresponding request, wherein the request specifies modelling requirements corresponding to the specification of the sensing task and the determined candidate configuration, e.g. that components that are involved in the candidate configuration and/or the sensing task and functionalities required in the sensing task and/or used according to the candidate configuration are modelled by the digital twin (i.e. digital replica). The digital twin (or digital replica) can be seen as an a (virtual) environment identical to (at least a part of) the mobile radio communication system, e.g. including components that can be managed (in particular configured) by the mobile communication system. The initiation of the digital replica (or digital twin) is for example requested from a digital twin provision component, i.e. a data processing component (e.g. one of more data processing devices) which are configured to provide a digital twin according to a request.

In 904, a simulation of sensing according to the candidate configuration by the mobile radio communication system using the digital replica is performed.

In 905, it is determined from results of the simulation whether the sensing according to the candidate configuration fulfils the goals and/or constraints.

In 906, sensing according to the candidate configuration is performed if (e.g. only if) it has been determined that sensing according to the candidate configuration fulfils the goals and/or constraints.

In response to a determination that the goals and/or constraints are not fulfilled, the candidate configuration is discarded and another configuration is determined until a feasible one (fulfilling the goals and/or constraints) has been found, i.e. sensing is then performed according to a different configuration than the candidate configuration.

According to various embodiments, in other words, a simulation is performed whether a configuration fulfils the goals and/or constraints (e.g. expectations of an intent) of a sensing task to decide whether to use the configuration for the sensing task. Since a lot of components may be involved in a sensing and complex operations which may interfere with each other are involved, this provides a reliable check whether a configuration is feasible before using (and possibly wasting) resources (communication resources as well as computational and/or storage resources) of the mobile communication network to perform the sensing.

For example, the method of figure 9 is implemented by introducing an intent expectation models for ISAC, introducing an agent to process and/or execute ISAC according to specified expectations, introducing an entity for detecting and/or resolving (e.g. ISAC) conflicts, introducing an entity to check feasibility of ISAC expectations, introducing a an intent report model for ISAC for reporting results about feasibility checking and conflict checking and/or introducing a Network Digital Twin for ISAC simulation.

According to various embodiments, the approach of figure 9 enables capabilities related to intent driven management of integrated sensing and communication services, and/or enables operators to be aware of feasibility of their expectations from ISAC services and potential conflicts. It is non-restrictive to one orchestration framework (e.g., 3GPP) and can be applied to other designs like in O-RAN based solutions. So, it is not tailored to a specific technology or framework. Further, it can cover both RAN and Core network deployment scenarios for ISAC.

For example, the approach of figure 9 enables an MnS consumer to specify its ISAC expectations, targets, requirements and/or constraints and facilitate autonomous configuration of network to fulfil the MnS consumers' ISAC expectations, targets, requirements and constraints. According to one embodiment, it also enables the MnS consumer to receive a report regarding fulfilment of ISAC expectations, targets, requirements and constraints. It also enables the MnS consumer to simulate feasibility of their ISAC expectations, targets, requirements and/or constraints with support of a Network Digital Twin.

The method is for example performed by one or more circuits (e.g. one or more components of a mobile communication system). A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit". According to an embodiment, a communication system is provided which comprises the mobile terminal and which is particular configured (i.e. comprises one or more components configured) to provision the secure element with the sensing profile.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a sensing service by a mobile radio communication system, comprising:
Receiving a specification of a sensing task, wherein the specification includes requirements, including goals and/or constraints, of the sensing task;
Determining a candidate configuration of the mobile radio communication system to perform the sensing task;
Requesting to instantiate a simulation environment that is a digital replica of the mobile radio communication system based on the specification of the sensing task and the determined candidate configuration;
Performing a simulation of sensing according to the candidate configuration by the mobile radio communication system using the digital replica;
Determining, from results of the simulation, whether the sensing according to the candidate configuration fulfils the goals and/or constraints; and
Performing sensing according to the candidate configuration if it has been determined that sensing according to the candidate configuration fulfils the goals and/or constraints.

2. The method of claim 1, wherein the candidate configuration comprises a configuration of one or more mobile terminals of the mobile radio communication system, one or more core network components of the mobile radio communication system and/or one or more radio access network components of the mobile radio communication system.

3. The method of claim 1 or 2, wherein the candidate configuration comprises a selection of one or more mobile terminals of the mobile radio communication system, one or more core network components of the mobile radio communication system and/or one or more radio access network components of the mobile radio communication system to perform the sensing task and performing the sensing according to the candidate configuration comprises performing the sensing using the selected one or more mobile terminals of the mobile radio communication system, selected one or more core network components of the mobile radio communication system and/or selected one or more radio access network components of the mobile radio communication system.

4. The method of any one of claims 1 to 3, wherein the candidate configuration comprises a beamforming configuration, a transmission power configuration and/or a bandwidth and/or frequency configuration of one or more components of the communication system for performing the sensing task.

5. The method of any one of claims 1 to 4, comprising, in response to having determined that sensing according to the candidate configuration does not fulfil the goals and/or constraints, changing the candidate configuration to another configuration, requesting to instantiate a simulation environment that is a digital replica of the mobile radio communication system based on the specification of the sensing task and the changed candidate configuration, performing a further simulation of sensing according to the changed candidate configuration by the mobile radio communication system using the digital replica, determining, from results of the further simulation, whether the sensing according to the changed candidate configuration fulfils the goals and/or constraints and performing sensing according to the changed candidate configuration if it has been determined that sensing according to the candidate configuration fulfils the goals and/or constraints.

6. The method of any one of claims 1 to 5, comprising determining whether there is a conflict between the candidate configuration and a present configuration of the mobile radio communication system and performing sensing according to the candidate configuration if it has been determined that sensing according to the candidate configuration fulfils the goals and/or constraints and it has been determined that there is no a conflict between the candidate configuration and a present configuration of the mobile radio communication system.

7. The method of claim 6, comprising determining whether there is a conflict between the candidate configuration and a present configuration of the mobile radio communication system from results of the simulation.

8. The method of claim 7, comprising, in response to having determined that there is a conflict between the candidate configuration and a present configuration of the mobile radio communication system, changing the candidate configuration to another configuration, performing a further simulation of sensing according to the changed candidate configuration by the mobile radio communication system, determining, from results of the further simulation, whether the sensing according to the changed candidate configuration fulfils the goals and/or constraints, determining whether there is a conflict between the changed candidate configuration and the present configuration of the mobile radio communication system and performing sensing according to the changed candidate configuration if it has been determined that sensing according to the changed candidate configuration fulfils the goals and/or constraints and it has been determined that there is no a conflict between the changed candidate configuration and the present configuration of the mobile radio communication system.

9. The method of claim 8, comprising determining whether there is a conflict between the changed candidate configuration and the present configuration of the mobile radio communication system from results of the further simulation.

10. The method of any one of claims 1 to 9, wherein performing sensing according to the candidate configuration comprises configuring a plurality of components of the mobile radio communication system according to the candidate configuration and controlling the plurality of components of the mobile radio communication system to perform sensing.

11. The method of any one of claims 1 to 10, wherein the sensing comprises transmitting one or more mobile radio communication signals, receiving one or more reflections of the one or more mobile radio communication signals and determining sensing data from the one or more reflections

12. The method of any one of claims 1 to 11, wherein the sensing is Integrated Sensing and Communication according to Third Generation Partnership Project.

13. The method of any one of claims 1 to 12, comprising determining the candidate configuration by consulting a knowledge base of suitable configurations and storing the candidate configuration in the knowledge base in response to that it has been determined that sensing according to the candidate configuration fulfils the goals and/or constraints.

14. A mobile communication system, configured to perform the method of any one of claims 1 to 13.

## Amended claims

### Amended claims in accordance with Rule 137(2) EPC.

1. A method for providing a sensing service by a mobile radio communication system (100), comprising:
Receiving (901) a specification (202) of a sensing task, wherein the specification (202) includes requirements, including goals and/or constraints, of the sensing task;
Determining (902) a candidate configuration of the mobile radio communication system (100) to perform the sensing task;
Requesting (903) to instantiate a simulation environment that is a digital replica (210, 504) of the mobile radio communication system (100) based on the specification (202) of the sensing task and the determined candidate configuration;
Performing (904) a simulation of sensing according to the candidate configuration by the mobile radio communication system (100) using the digital replica (210, 504);
Determining (905), from results of the simulation, whether the sensing according to the candidate configuration fulfils the goals and/or constraints;
Determining whether there is a conflict between the candidate configuration and a present configuration of the mobile radio communication system (100); and
Performing (906) sensing according to the candidate configuration if it has been determined that sensing according to the candidate configuration fulfils the goals and/or constraints and it has been determined that there is no conflict between the candidate configuration and a present configuration of the mobile radio communication system (100).

2. The method of claim 1, wherein the candidate configuration comprises a configuration of one or more mobile terminals of the mobile radio communication system (100), one or more core network components of the mobile radio communication system (100) and/or one or more radio access network components of the mobile radio communication system (100).

3. The method of claim 1 or 2, wherein the candidate configuration comprises a selection of one or more mobile terminals of the mobile radio communication system (100), one or more core network components of the mobile radio communication system (100) and/or one or more radio access network components of the mobile radio communication system (100) to perform the sensing task and performing the sensing according to the candidate configuration comprises performing the sensing using the selected one or more mobile terminals of the mobile radio communication system (100), selected one or more core network components of the mobile radio communication system (100) and/or selected one or more radio access network components of the mobile radio communication system (100).

4. The method of any one of claims 1 to 3, wherein the candidate configuration comprises a beamforming configuration, a transmission power configuration and/or a bandwidth and/or frequency configuration of one or more components of the communication system (100) for performing the sensing task.

5. The method of any one of claims 1 to 4, comprising, in response to having determined that sensing according to the candidate configuration does not fulfil the goals and/or constraints, changing the candidate configuration to another configuration, requesting to instantiate a simulation environment that is a digital replica (210, 504) of the mobile radio communication system (100) based on the specification (202) of the sensing task and the changed candidate configuration, performing a further simulation of sensing according to the changed candidate configuration by the mobile radio communication system (100) using the digital replica (210, 504), determining, from results of the further simulation, whether the sensing according to the changed candidate configuration fulfils the goals and/or constraints and performing sensing according to the changed candidate configuration if it has been determined that sensing according to the candidate configuration fulfils the goals and/or constraints.

6. The method of any one of claims 1 to 5, comprising determining whether there is a conflict between the candidate configuration and a present configuration of the mobile radio communication system (100) from results of the simulation.

7. The method of claim 6, comprising, in response to having determined that there is a conflict between the candidate configuration and a present configuration of the mobile radio communication system (100), changing the candidate configuration to another configuration, performing a further simulation of sensing according to the changed candidate configuration by the mobile radio communication system (100), determining, from results of the further simulation, whether the sensing according to the changed candidate configuration fulfils the goals and/or constraints, determining whether there is a conflict between the changed candidate configuration and the present configuration of the mobile radio communication system (100) and performing sensing according to the changed candidate configuration if it has been determined that sensing according to the changed candidate configuration fulfils the goals and/or constraints and it has been determined that there is no a conflict between the changed candidate configuration and the present configuration of the mobile radio communication system (100).

8. The method of claim 7, comprising determining whether there is a conflict between the changed candidate configuration and the present configuration of the mobile radio communication system (100) from results of the further simulation.

9. The method of any one of claims 1 to 8, wherein performing sensing according to the candidate configuration comprises configuring a plurality of components of the mobile radio communication system (100) according to the candidate configuration and controlling the plurality of components of the mobile radio communication system (100) to perform sensing.

10. The method of any one of claims 1 to 9, wherein the sensing comprises transmitting one or more mobile radio communication signals, receiving one or more reflections of the one or more mobile radio communication signals and determining sensing data from the one or more reflections

11. The method of any one of claims 1 to 10, wherein the sensing is Integrated Sensing and Communication according to Third Generation Partnership Project.

12. The method of any one of claims 1 to 11, comprising determining the candidate configuration by consulting a knowledge base of suitable configurations and storing the candidate configuration in the knowledge base in response to that it has been determined that sensing according to the candidate configuration fulfils the goals and/or constraints.

13. A mobile communication system (100), configured to perform the method of any one of claims 1 to 12.
